# EUROPÄISCHE PATENTSCHRIFT

(11) **EP 0 255 932 B1**
(45) Veröffentlichungstag und Bekanntmachung des Hinweises auf die Patenterteilung: **12.05.1993**
(21) Anmeldenummer: 87111213.2
(22) Anmeldetag: 04.08.1987
(51) Int. Cl.: B01D 3/38

(54) **Verfahren zur Regenerierung eines beladenen Waschmittels**
Method for recuperating a charged washing agent
Procédé de régénération d'une lessive chargée

(30) Priorität: 07.08.1986 DE 3626697
(43) Veröffentlichungstag der Anmeldung: 17.02.1988
(73) Patentinhaber: Linde Aktiengesellschaft, 65189 Wiesbaden (DE)
(72) Erfinder: Becker, Hans, Dr.-Ing., D-8000 München (DE); Sporer, Josef, Dipl.-Ing., D-8121 Wielenbach (DE)
(74) Vertreter: Schaefer, Gerhard, Dr.

(56) Entgegenhaltungen:
- DE-A- 3 504 032
- US-A- 3 471 371

## Beschreibung

Die Erfindung betrifft ein Verfahren zur Regenerierung eines beladenen Waschmittels in einer Regenerierkolonne, die mit einer Sumpfheizung und einem Kopfkondensator ausgestattet ist, durch Strippen mit einem Dampf, bei dem nach Kondensation des Dampfes im Kopfkondensator die abgestrippten Komponenten abgezogen und das verbleibende Kondensat der Regenerierkolonne wieder zugeführt wird.

Bei vielen chemischen und physikalischen Wäschen erfolgt die Regenerierung durch Strippen mit einem Dampf, der beispielsweise durch Verdampfen einer im Waschmittel enthaltenen Komponente erzeugt wird. In der Praxis wird für diesen Zweck meist im beladenen Waschmittel enthaltenes Wasser verwendet, doch sind auch andere Stoffe wie beispielsweise Methanol oder Kohlenwasserstoffe möglich.

Die Regenerierung wird dabei üblicherweise in einer aus zwei Abschnitten bestehenden Regenerierkolonne durchgeführt. Der untere Abschnitt ist der eigentliche Regenerierabschnitt, während der obere zur Rückwaschung von vom Strippdampf mitgeführten Waschmittelresten dient. Das beladene Waschmittel wird zwischen den beiden Abschnitten aufgegeben. Der zum Strippen notwendige Dampf wird durch Wärmezufuhr im Kolonnensumpf erzeugt. Nach Kondensation des Dampfes im Kopfkondensator werden die aus dem Waschmittel abgestrippten Komponenten gasförmig abgezogen. Das verbleibende Kondensat wird als Rücklauf auf den oberen Kolonnenabschnitt aufgegeben und vermischt sich nach Durchlaufen dieses Abchnitts im Regenerierabschnitt mit dem beladenen Waschmittel.

Häufig wird ein Teilstrom des Kondensats abgezogen und zur Waschmittelrückwaschung am Kopf der Waschsäule, aus der das beladene Waschmittel herrührt, verwendet. Nach Durchlaufen dieses Abschnitts vermischt sich das Kondensat ebenfalls mit dem Waschmittel.

Die Vermischung des Kondensats mit dem Waschmittel ist insofern ungünstig, als die Mischung einen höheren Siedepunkt als das reine Kondensat hat und bei gleitender Temperatur siedet. Besonders ungünstig ist, daß durch die Zumischung des Kondensats die Temperatur in dem eigentlichen Regenerierabschnitt deutlich niedriger liegt als ohne Zumischung und daß dadurch die Regenerierung des Waschmittels unnötig erschwert wird.

Aus der US-A-3,471 371 ist ein Verfahren zur Regenerierung beladener Waschmittel in Regenerierkolonnen mit Sumpfheizung und Kopfkondensator, wobei mit Dampf gestrippt wird und das Kondensat des Kopfkondensators wieder als Rücklauf in die Regenerierkolonne zurückgegeben wird und wobei das Kondensat dann etwas weiter unten wieder aus der Regenerierkolonne abgezogen und in deren unteren Abschnitt gänzlich verdampft eingespeist wird.

Der Erfindung liegt die Aufgabe zugrunde ein Verfahren der eingangs genannten Art zu verbessern.

Diese Aufgabe wird erfindungsgemäß dadurch gelöst, daß das Kondensat flüssig in den unteren Abschnitt der Regenerierkolonne eingespeist wird.

Aus der nicht vorveröffentlichten Deutschen Patentanmeldung DE-A-35 04 032.7 ist ein gattungsgemäßes Verfahren bekannt, bei dem das Kondensat vor der Einspeisung zumindest zum größeren Teil wieder verdampft werden muß. Überraschenderweise wurde nun gefunden, daß eine Verdampfung in einem separaten Wärmetauscher nicht unbedingt erforderlich ist. Damit sind apparative Einsparungen im erfindungsgemäßen Verfahren möglich.

Das Kondensat kann beim erfindungsgemäßen Verfahren direkt in flüssiger Form in den unteren Bereich der Regenerierkolonne eingespeist werden. In einer anderen Ausgestaltung der Erfindung kann es dem aus dem Sumpf der Regenerierkolonne abgezogenen Teilstrom, der für die Sumpfbeheizung verwendet wird, zugegeben werden. Dadurch wird die im üblicherweise mit Dampf beheizten Wärmetauscher gebildete Strippgasmenge größer und der Wärmeetauscher hat einen besseren Trennwirkungsgrad als bei üblichen Verfahren. Dadurch wird auch der Strippdampfbedarf des Verfahrens tendenziell kleiner.

Als besonders günstig hat es sich erwiesen, wenn zumindest ein Teil des Kondensats vor seiner Einspeisung in den unteren Bereich der Regenerierkolonne als Rücklauf auf einen oberhalb der Eintrittsstelle des beladenen Waschmittels gelegenen Abschnitt der Regenerierkolonne aufgegeben und noch oberhalb der Eintrittsstelle des beladenen Waschmittels wieder abgezogen wird. Durch das Kondensat wird dabei in diesem Bereich der Regenerierkolonne aus dem Gas, das den Regenerierteil der Kolonne verläßt, mitgeführtes Waschmittel zurückgewonnen.

Häufig wird auch ein Teilstrom des Kondensats in analoger Weise zum Kopf einer Waschsäule geführt, um dort eine Waschmittelrückgewinnung vorzunehmen. Dabei wird dieser Teilstrom als Rücklauf auf einen oberhalb der Eintrittsstelle des regenerierten Waschmittels gelegenen Abschnitt der Waschkolonne aufgegeben und vorteilhafterweise noch oberhalb der Eintrittsstelle des regenerierten Waschmittels wieder abgezogen und dann in den unteren Bereich der Regenerierkolonne geführt.

Das erfindungsgemäße Verfahren läßt sich zur Regenerierung aller einschlägigen Waschmittel anwenden, beispielsweise bei chemischen Wäschen wie Heißpottasche, Monoethanolamin oder Diethanolamin, oder auch bei physikalischen Wäschen mit Polyethylenglykolethern oder Methanol, sowie bei Zwitterwäschen, wie mit einer Mischung aus Alkanolamin und Methanol.

Weitere Einzelheiten des erfindungsgemäßen Verfahren werden nachfolgend anhand der in den Figuren schematisch dargestellten Ausführungsbeispiele erläutert.

Es zeigen:
- Figur 1: eine erste Ausführungsform des erfindungsgemäßen Verfahrens und
- Figur 2: eine andere Ausführungsform des erfindungsgemäßen Verfahrens.

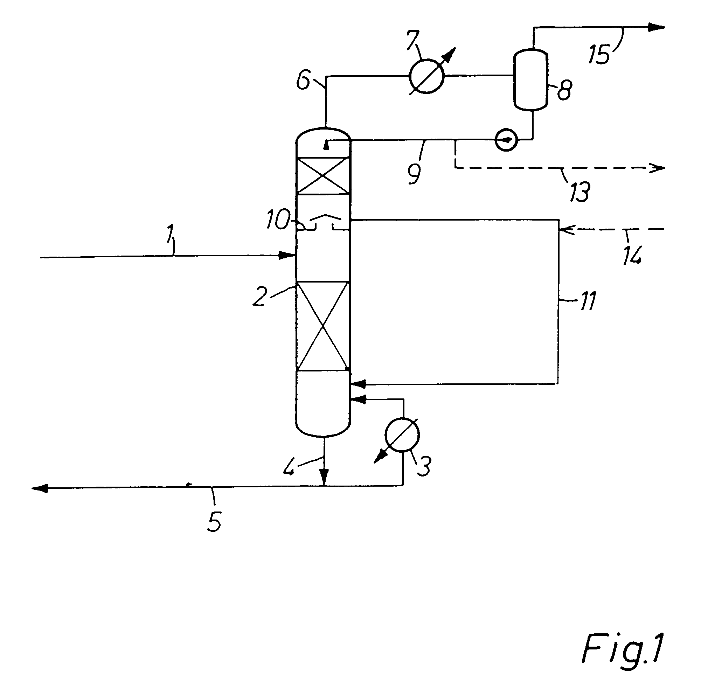

Gemäß Figur 1 wird über Leitung 1 beladenes Waschmittel aus einer nichtdargestellten Wäsche herangeführt und in einen mittleren Bereich einer Regenerierkolonne 2 eingespeist. Die Kolonne 2 ist mit einer Sumpfheizung 3 und einem Kopfkondensator 7 ausgestattet. Nach Regenerierung des Waschmittels durch Strippen mit aus dem Sumpf aufsteigendem Dampf wird das Waschmittel über Leitung 4 abgezogen und zu einem Teil über die Sumpfheizung wieder zugeführt, während die Hauptmenge des regenerierten Waschmittels über Leitung 5 abgezogen und wieder der Wäsche zugeführt wird.

Der Strippdampf, der die abgestrippten Komponenten enthält, verläßt die Kolonne 2 über Kopf durch Leitung 6, wird teilweise im Kondenstor 7 kondensiert und dem Abscheider 8 zugeführt. Aus dem Abscheider wird über Leitung 15 das abgestrippte Gas und über die Leitung 9 das Kondensat abgezogen, das als Rücklauf auf den oberen Kolonnenabschnitt aufgegeben wird.

Um eine Vermischung des Kondensats mit Waschmittel zu vermeiden, ist erfindungsgemäß im oberen Kolonnenabschnitt oberhalb der Eintrittsstelle des beladenen Waschmittels in der Kolonne ein Kaminboden 10 eingebaut, so daß das Kondensat über Leitung 11 oberhalb des Kaminbodens abgezogen werden kann. Es wird um den Regenerierabschnitt der Kolonne 2 herumgeführt und direkt in den unteren Bereich der Kolonne 2 eingespeist.

Wie gestrichelt angedeutet ist,kann ein Teil des Kondensats aus Leitung 9 über eine Leitung 13 zu einer Wäsche geführt werden, um dort ebenfalls zur Waschmittelrückgewinnung eingesetzt zu werden. Dieser Teilstrom wird nach der Waschmittelrückgewinnung über Leitung 14 zurückgeführt und dem aus der Kolonne 2 abgezogenen Kondensat in Leitung 11 zugemischt.

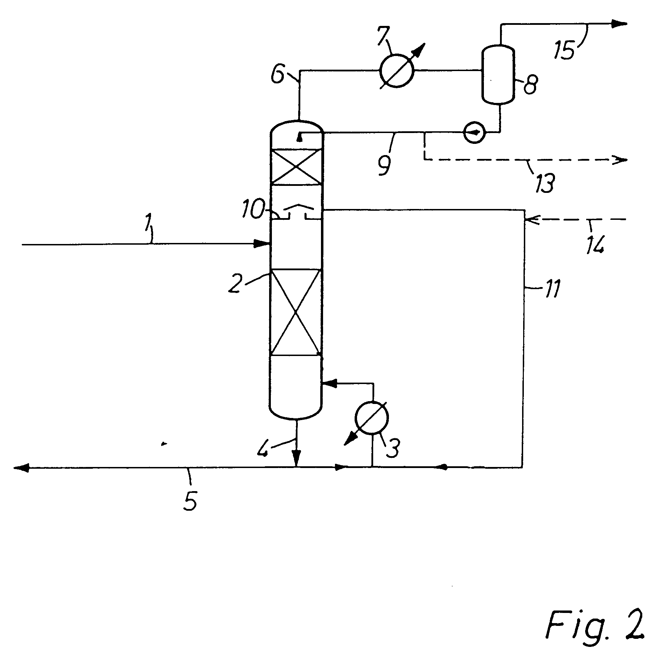

Im in der Figur 2 dargestellten Ausführungsbeispiel wird das über Leitung 11 abgezogene Kondensat nicht direkt in den unteren Bereich der Regenerierkolonne 2 eingespeist, sondern in den Teilstrom des Sumpfprodukts, der dem Wärmetauscher 3 für die Sumpfheizung zugeführt wird.

In einem konkreten Ausführungsbeispiel werden über Leitung 1 1000m³/h Tetraethylenglykoldimethylether, das mit SO₂ beladen ist und Wasser enthält, aus dem Absorptionsteil einer Rauchgaswäsche herangeführt und in die Mitte der Regenerierkolonne 2 eingespeist.Aus dem beladenen Waschmittel werden mit ca.120 kmol/h Wasserdampf die Verunreinigungen abgestrippt. Das regenerierte Waschmittel wird aus dem Sumpf über die Leitungen 4 und 5 abgezogen und in den Waschteil zurückgeführt.

Über Leitung 6 ziehen ca. 145 kmol/h Dampf mit 25 kmol/h abgestrippten Gasen, insbesondere SO₂ und CO₂, mit einer Temperatur von 72°C und einem Druck von 0,45 bar ab. Der größte Teil des Wasserdampfs wird im Wärmetauscher 7 bei etwa 30°C kondensiert und dem Abscheider 8 zugeführt. Aus diesem wird das kondensierte Wasser über Leitung 9 abgezogen und als Rücklauf auf die Kolonne 2 aufgegeben. Über Kopf des Abscheiders 8 ziehen über Leitung 15 ca. 30 kmol/h Restgas ab. Aus der Kolonne 2 werden oberhalb des Kaminbodens 10 etwa 115 kmol/h Kondensat mit einer Temperatur von etwa 76°C abgezogen und über Leitung 11 dem unteren Bereich der Kolonne 2 zugeführt.

Ein Teilstrom des Kondensats, beispielsweise 50 kmol/h, kann als Rücklauf über Leitung 13 zur Wäsche geführt und über Leitung 14 mit einer Temperatur von etwa 25° dem Kondensat in Leitung 11 wieder zugemischt werden.

## Patentansprüche

1. Verfahren zur Regenerierung eines beladenen Waschmittels in einer aus einem oberen und einem unteren Abschnitt bestehenden Regenerierkolonne, die mit einer Sumpfheizung und einem Kopfkondensator ausgestattet ist, durch Strippen mit einem Dampf, wobei nach Kondensation des Dampfes im Kopfkondensator die abgestrippten Komponenten abgezogen und das verbleibende Kondensat dem oberen Abschnitt der Regenerierkolonne zumindest teilweise wieder als Rücklauf zugeführt wird und wobei das zugeführte Kondensat anschließend oberhalb der Eintrittsstelle des beladenen Waschmittels abgezogen und unterhalb der Eintrittsstelle des beladenen Waschmittels in den unteren Abschnitt der Regenerierkolonne eingespeist wird, **dadurch gekennzeichnet,**
daß das Kondensat flüssig in den unteren Abschnitt der Regenerierkolonne eingespeist wird.

2. Verfahren nach Anspruch 1, dadurch gekennzeichnet, daß die Sumpfheizung der Regenerierkolonne durch indirekten Wärmetausch eines Teils des Sumpfprodukts der Regenerierkolonne mit einem Heizmedium erfolgt und daß das Kondensat in den aus dem Sumpf abgezweigten Teilstrom eingespeist wird.

## Claims

1. A process for the regeneration of a charged scrubbing agent in a regenerating column comprising an upper and a lower section which is equipped with bottom heating and a head condenser by stripping with a vapour, wherein following the condensation of the vapour in the head condenser the stripped-off components are discharged and the remaining condensate is at least partially returned to the upper section of the regenerating column as a reflux stream, and wherein the supplied condensate is then discharged above the inlet position of the charged scrubbing agent, and below the inlet position of the charged scrubbing agent is fed into the lower section of the regenerating column, characterised in that the condensate is fed into the lower section of the regenerating column in liquid form.

2. A process as claimed in Claim 1, characterised in that the bottom heating of the regenerating column takes place by indirect heat exchange between a part of the bottom product of the regenerating column and a heating medium, and that the condensate is fed into the sub-stream branched off from the bottom.

## Revendications

1. Procédé de régénération d'un agent de lavage chargé d'impuretés dans une colonne de régénération comportant une section supérieure et une section inférieure et munie d'un système de chauffage de cuve et d'un condenseur de tête, par entraînement à la vapeur, dans lequel après condensation de la vapeur dans le condenseur de tête, les constituants entraînés sont extraits et le condensat restant est au moins en partie réinjecté, comme reflux, dans la section supérieure de la colonne de régénération, le condensat ainsi réinjecté étant alors retiré à un niveau situé au-dessus de la zone d'entrée de l'agent de lavage chargé d'impuretés puis renvoyé à un niveau situé au-dessous de la zone d'entrée de l'agent de lavage chargé d'impuretés dans la section inférieure de la colonne de régénération, caractérisé en ce que le condensat est renvoyé à l'état fluide dans la section inférieure de la colonne de régénération.

2. Procédé selon la revendication 1, caractérisé en ce que le chauffage de la cuve de la colonne de régénération est réalisé par échange thermique indirect d'une partie des produits de cuve de la colonne de régénération avec un agent de chauffage et en ce que le condensat est injecté dans le courant partiel dérivé de la cuve de la colonne.
